# EUROPÄISCHE PATENTSCHRIFT

(11) **EP 2 063 145 B1**
(45) Veröffentlichungstag und Bekanntmachung des Hinweises auf die Patenterteilung: **28.05.2014**
(21) Anmeldenummer: 08168701.4
(22) Anmeldetag: 10.11.2008
(51) Int. Cl.: F16D 13/75

(54) **Druckplattenbaugruppe**
Pressure plate arrangement
Plateau de pression

(30) Priorität: 21.11.2007 DE 102007056189; 21.10.2008 DE 102008042988
(43) Veröffentlichungstag der Anmeldung: 27.05.2009
(73) Patentinhaber: ZF Friedrichshafen AG, 88038 Friedrichshafen (DE)
(72) Erfinder: Knauer, Wolfgang, 97486 Königsberg (DE)

(56) Entgegenhaltungen:
- EP-A1- 1 657 463
- US-A1- 2004 026 206
- US-B1- 6 227 341

## Beschreibung

Die vorliegende Erfindung betrifft eine Druckplattenbaugruppe, insbesondere für eine Kraftfahrzeug-Reibungskupplung mit automatischem Verschleißausgleich, umfassend ein Gehäuse, welches an einer Widerlageranordnung zur gemeinsamen Drehung mit dieser um eine Drehachse festlegbar oder festgelegt ist, eine im Gehäuse im Wesentlichen drehfest angeordnete und bezüglich diesem axial verlagerbare Anpressplatte, eine Kraftbeaufschlagungsanordnung, vorzugsweise Membranfeder, welche bezüglich des Gehäuses einerseits und der Anpressplatte andererseits abgestützt ist, eine im Abstützweg der Kraftbeaufschlagungsanordnung bezüglich der Anpressplatte angeordnete Verschleiß-Nachstellvorrichtung mit wenigstens einem zur Verschleißkompensation verlagerbaren Nachstellelement, wobei wenigstens ein Nachstellelement zur Bewegung in einer Verschleiß-Nachstellbewegungsrichtung vorgespannt ist und sich bei Bewegung in der Verschleiß-Nachstellbewegungsrichtung mit einer in der Verschleiß-Nachstellbewegungsrichtung geneigten Fläche entlang einer Gegenfläche bewegt oder/und sich bei Bewegung in der Verschleiß-Nachstellbewegungsrichtung entlang einer in der Verschleiß-Nachstellbewegungsrichtung geneigten Gegenfläche bewegt, wobei das zur Bewegung in der Verschleiß-Nachstellbewegungsrichtung vorgespannte Nachstellelement durch wenigstens ein Blockierorgan gegen Bewegung in der Verschleiß-Nachstellbewegungsrichtung blockierbar ist, wenigstens eine Spielgeberanordnung zur Erfassung des Verschleißes, wobei die wenigstens eine Spielgeberanordnung ein Erfassungselement an der Anpressplatte umfasst, das mit einer bei Auftreten von Verschleiß bezüglich der Anpressplatte verlagerbaren Komponente zur Erfassung des Verschleißes in Wechselwirkung steht oder bringbar ist und durch diese Wechselwirkung in eine dem Verschleiß entsprechende Stellung bezüglich der Anpressplatte bringbar ist, sowie ein Arretierelement, durch welches das Erfassungselement der wenigstens einen Spielgeberanordnung in seiner dem Verschleiß entsprechenden Stellung bezüglich der Anpressplatte arretierbar ist, wobei das wenigstens eine Blockierorgan an dem Arretierelement vorgesehen ist.

Eine derartige Druckplattenbaugruppe ist schon bekannt. Bei dieser bekannten Druckplattenbaugruppe umfasst die Verschleiß-Nachstellvorrichtung zwei ringartig ausgebildete Nachstellelemente. Einer der Nachstellringe ist zur Bewegung in Umfangsrichtung, welche der Verschleiß-Nachstellbewegungsrichtung entspricht, vorgespannt. Die beiden Nachstellringe weisen an ihren einander zugewandt liegenden Seiten Rampenflächenbereiche auf, so dass bei Relativdrehung der Nachstellringe in Umfangsrichtung die durch diese beiden Nachstellringe gebildete Baugruppe ihre Axialabmessung vergrößert, um somit zuvor durch Abnahme der Dicke von Reibbelägen aufgetretenen und sensierten Verschleiß zu kompensieren. Um eine Verschleißkompensation nur dann durchzuführen, wenn Verschleiß tatsächlich aufgetreten und erfasst worden ist, weist das als keilartiger Schieber ausgebildete Arretierelement einen Blockieranschlag auf, der in eine Blockieraussparung des in Umfangsrichtung bewegbaren Nachstellrings mit Bewegungsspiel eingreift. Wird ein Verschleiß sensiert, so gibt das Erfassungselement den Arretierschieber zur Bewegung in Umfangsrichtung in dem Verschleiß zugeordnetem Ausmaß frei. Der keilartige Arretierschieber füllt also den durch zunehmenden Verschleiß anwachsenden Raum zwischen dem Erfassungselement und der Anpressplatte aus. Bei dieser Bewegung des Arretierschiebers bewegt sich entsprechend auch der Blockieranschlag in der ihm zugeordneten Blockieraussparung des Nachstellrings. Bei einem nachfolgenden Ausrückvorgang, bei welchem die Nachstellringe nicht mehr durch die Membranfeder belastet sind, kann sich der in Umfangsrichtung bewegbare bzw. vorgespannte Nachstellring verdrehen, und zwar so lange, bis er wieder am Blockieranschlag des Arretierschiebers anliegt.

Ein Problem bei derartigen Druckplattenbaugruppen ist, dass eine undefinierte oder ungewollte Nachstellung, welche durch eine entsprechend undefinierte Bewegung des Arretierelements und mithin dann eine entsprechende Folgebewegung des bewegbaren Nachstellrings ausgelöst werden kann, verhindert werden muss. Zu diesem Zwecke beaufschlagt das blattfederartig ausgebildete Erfassungselement das als keilartiger Schieber ausgebildete Arretierelement mit einer vorbestimmten Federlast, steht mit diesem also grundsätzlich in Reibwechselwirkung. Durch die Federelastizität und die damit generierte Vorspannwirkung des Erfassungselements und dem somit erzeugten Reibkontakt zum Arretierelement wird dieses grundsätzlich auch in Umfangsrichtung vorgespannte Bauteil an einer Bewegung in Umfangsrichtung gehindert. Um auch bei stärkeren Erschütterungen oder Vibrationen dafür zu sorgen, dass undefinierte Bewegungen nicht auftreten, muss für eine entsprechend starke Vorspannung des Erfassungselements gegen das Arretierelement gesorgt werden. Dies wiederum beeinträchtigt das Nachstellverhalten, da bei Auftreten von Verschleiß das Erfassungselement gegen die von ihm selbst generierte Vorspannwirkung bezüglich der Anpressplatte bewegt werden muss. Wird das System also so ausgelegt, dass eine hohe Sicherheit gegen undefinierte Nachstellvorgänge besteht, kann dies die Durchführung erforderlicher Nachstellvorgänge bei Auftreten von Verschleiß beeinträchtigen. Soll eine derartige Beeinträchtigung praktisch ausgeschlossen werden, muss das System grundsätzlich so ausgelegt werden, dass die Gefahr einer undefinierten Nachstellung größer wird.

Die DE 102 36 832 A1 offenbart eine gattungsgemäße Druckplattenbaugruppe. Dabei weist das Arretierelement Rückhaltestufen auf, welche mit dem Erfassungselement zusammenwirken. Hierbei bilden die einzelnen Rückhaltestufen entsprechend dem jeweiligen Verschleiß eine Anschlagfläche, an welchem das Erfassungselement anliegt.

Es ist die Aufgabe der vorliegenden Erfindung, eine derartige Druckplattenbaugruppe so auszugestalten, dass bei hoher Nachstellsicherheit die Gefahr undefinierter Nachstellvorgänge gemindert ist.

Erfindungsgemäß wird diese Aufgabe gelöst durch eine Druckplattenbaugruppe, insbesondere für eine Kraftfahrzeug-Reibungskupplung mit automatischem Verschleißausgleich, umfassend ein Gehäuse, welches an einer Widerlageranordnung zur gemeinsamen Drehung mit dieser um eine Drehachse festlegbar oder festgelegt ist, eine im Gehäuse im Wesentlichen drehfest angeordnete und bezüglich diesem axial verlagerbare Anpressplatte, eine Kraftbeaufschlagungsanordnung, vorzugsweise Membranfeder, welche bezüglich des Gehäuses einerseits und der Anpressplatte andererseits abgestützt ist, eine im Abstützweg der Kraftbeaufschlagungsanordnung bezüglich der Anpressplatte angeordnete Verschleiß-Nachstellvorrichtung mit wenigstens einem zur Verschleißkompensation verlagerbaren Nachstellelement, wobei wenigstens ein Nachstellelement zur Bewegung in einer Verschleiß-Nachstellbewegungsrichtung vorgespannt ist und sich bei Bewegung in der Verschleiß-Nachstellbewegungsrichtung mit einer in der Verschleiß-Nachstellbewegungsrichtung geneigten Fläche entlang einer Gegenfläche bewegt oder/und sich bei Bewegung in der Verschleiß-Nachstellbewegungsrichtung entlang einer in der Verschleiß-Nachstellbewegungsrichtung geneigten Gegenfläche bewegt, wobei das zur Bewegung in der Verschleiß-Nachstellbewegungsrichtung vorgespannte Nachstellelement durch wenigstens ein Blockierorgan gegen Bewegung in der Verschleiß-Nachstellbewegungsrichtung blockierbar ist, wenigstens eine Spielgeberanordnung zur Erfassung des Verschleißes, wobei die wenigstens eine Spielgeberanordnung ein Erfassungselement an der Anpressplatte umfasst, das mit einer bei Auftreten von Verschleiß bezüglich der Anpressplatte verlagerbaren Komponente zur Erfassung des Verschleißes in Wechselwirkung steht oder bringbar ist und durch diese Wechselwirkung in eine dem Verschleiß entsprechende Stellung bezüglich der Anpressplatte bringbar ist, sowie ein Arretierelement, durch welches das Erfassungselement der wenigstens einen Spielgeberanordnung in seiner dem Verschleiß entsprechenden Stellung bezüglich der Anpressplatte arretierbar ist, wobei das wenigstens eine Blockierorgan an dem Arretierelement vorgesehen ist, welche gekennzeichnet ist durch eine zwischen dem Arretierelement und dem Erfassungselement der wenigstens einen Spielgeberanordnung oder/und der Anpressplatte wirkende und eine Bewegung des Arretierelements bezüglich des Erfassungselements und der Anpressplatte nur dann, wenn das Erfassungselement bezüglich der Anpressplatte in einem eine Verschleißnachstellung zulassenden Ausmaß bewegt worden ist, zulassende Formschlusseingriffsanordnung, wobei die Formschlusseingriffsanordnung eine erste Verzahnung an dem Arretierelement und eine zweite Verzahnung an einem mit dem Arretierelement zusammenwirkenden Bereich des Erfassungselements der wenigstens einen Spielgeberanordnung umfasst.

Bei der erfindungsgemäßen Druckplattenbaugruppe ist also vorgesehen, dass das Arretierelement nicht bzw. nicht nur durch eine durch Vorspannung des Erfassungselements generierte Reibwechselwirkung an einer undefinierten Bewegung gehindert wird. Vielmehr wird ein Formschluss erzeugt, und zwar zwischen dem Arretierelement und dem Erfassungselement oder/und dem Arretierelement und der Anpressplatte bzw. einer daran vorgesehenen Komponente. Ein derartiger Formschluss hat zur Folge, dass auch Vibrationen oder Rüttelbewegungen nicht bedingt durch eine kurzzeitige Minderung der Vorspannwirkung zu einem Nachrutschen des Arretierelements führen können. Diese kann tatsächlich erst dann in einen dem aufgetretenen Verschleiß entsprechenden Ausmaß bewegt werden, wenn durch entsprechende Verlagerung des Erfassungselements tatsächlich Verschleiß sensiert und mithin der Formschlusseingriff in bestimmtem Ausmaß aufgehoben worden ist.

Das Arretierelement ist vorzugsweise keilartig ausgebildet und greift mit einem als Blockierorgan wirksamen Blockieranschlag in eine Blockieraussparung des zur Bewegung in Umfangsrichtung vorgespannten Nachstellelements mit Bewegungsspiel in der Verschleiß-Nachstellbewegungsrichtung ein. Auf diese Art und Weise ist sichergestellt, dass aufgrund der Tatsache, dass das Arretierelement sich nur dann bewegen kann, wenn der Formschlusseingriff aufgehoben bzw. gemindert ist, entsprechend auch das bewegbare Nachstellelement nur bewegt werden kann, wenn eine Bewegung des Arretierelements möglich ist.

Das Arretierelement kann zur Bewegung in der Verschleiß-Nachstellbewegungsrichtung vorgespannt sein.

Um insbesondere bei Ausgestaltung des Erfassungselements der wenigstens einen Spielgeberanordnung mit blattfederartigem Aufbau eine definierte Bewegung desselben bezüglich der Anpressplatte und entsprechend eine definierte Zusammenwirkung mit dem Arretierelement zu erleichtern, wird vorgeschlagen, dass das Erfassungselement der wenigstens einen Spielgeberanordnung langgestreckt ist und in einem ersten Endbereich an der Anpressplatte festgelegt ist und in einem zweiten Endbereich den mit dem Arretierelement zusammenwirkenden Bereich mit der zweiten Verzahnung aufweist.

Bei derartiger langgestreckter Ausgestaltung des Erfassungselements wird derjenige Bereich, in welchem dieses auch mit dem Arretierelement zusammenwirkt, bedingt durch die Hebellänge eine Verschwenkbewegung bezüglich des Arretierelements durchführen. Um dabei eine gleichbleibende Zusammenwirkung der Verzahnungen zu ermöglichen, wird weiter vorgeschlagen, dass das Erfassungselement der wenigstens einen Spielgeberanordnung in seinem mit dem Arretierelement zusammenwirkenden Bereich bezüglich des Arretierelements konvex gewölbt ausgebildet ist und in diesem Bereich die zweite Verzahnung aufweist.

Bei einer alternativen oder zusätzlich vorzusehenden Variante wird vorgeschlagen, dass an der Anpressplatte oder einer an dieser vorgesehenen Komponente eine Verzahnung der Formschlusseingriffsformation vorgesehen ist, welche mit einer an dem Arretierelement vorgesehenen Verzahnung in Eingriff steht oder bringbar ist.

Bei einer baulich sehr einfach zu realisierenden Ausgestaltungsform kann vorgesehen sein, dass die Verschleiß-Nachstellvorrichtung zwei als Nachstellringe ausgebildete Nachstellelemente umfasst, wobei einer der Nachstellringe zur Bewegung in der Verschleiß-Nachstellbewegungsrichtung vorgespannt ist und der andere Nachstellring gegen Bewegung in der Verschleiß-Nachstellrichtung blockiert ist.

Um dabei sicherzustellen, dass nur einer der Nachstellringe sich in Umfangsrichtung bewegt und mithin auch eine definierte Verschleißkompensation stattfinden kann, wird vorgeschlagen, dass der andere Nachstellring durch ein an der Anpressplatte festgelegtes Blockierelement gegen Bewegung in der Verschleißnachstellrichtung blockiert ist. Dieses Blockierelement kann beispielsweise durch das Erfassungselement oder aber auch ein separates, an der Anpressplatte festgelegtes Element gebildet sein.

Bei einer derartigen Druckplattenbaugruppe treten Veränderungen in der Relativlage und mithin der Wirkcharakteristik nicht nur verschleißbedingt auf. Auch sich in eine Membranfeder einarbeitende Schneidenbereiche der Anpressplatte oder generell das Setzen der vorgespannt eingebauten Membranfeder können Veränderungen mit sich bringen. Wird bei Durchführung von Verschleißkompensationsvorgängen exakt das durch Dickenabnahme der Reibbeläge sensierte Verschleißausmaß kompensiert, hat dies zur Folge, dass andere die Relativlage verschiedener Baugruppen bzw. deren Wirkcharakteristik über die Betriebslebensdauer hinweg beeinflussende Größen nicht berücksichtigt werden. Es wird daher weiter vorgeschlagen, dass die Verschleiß-Nachstellvorrichtung zur Kompensation eines durch das Erfassungselement der wenigstens einen Spielgeberanordnung erfassten Verschleißes in einem von eins verschiedenen Kompensationsverhältnis ausgebildet ist. Dies bedeutet, dass bei Auftreten von Verschleiß in einem gewissen Ausmaß besipielsweise eine Überkompensation oder eine Unterkompensation stattfinden kann. Dies kann beispielsweise dadurch realisiert werden, dass ein Keilwinkel des Arretierelements sich von einem Neigungswinkel der geneigten Fläche des wenigstens einen Nachstellelements oder/und einem Neigungswinkel der Gegenfläche unterscheidet.

Das Arretierlelement kann radial außerhalb des wenigstens einen Nachstellelements angeordnet sein, so dass insbesondere bei Fliehkrafteinwirkung keine negative Wechselwirkung zwischen diesem Arretierelement und einem Nachstellelement erzeugt wird.

Weiter wird vorgeschlagen, dass das zur Bewegung in der Verschleiß-Nachstellbewegungsrichtung vorgespannte Nachstellelement durch wenigstens eine vorzugsweise in der Verschleiß-Nachstellbewegungsrichtung langgestreckte Feder vorgespannt ist.

Die vorliegende Erfindung wird nachfolgend mit Bezug auf die beiliegenden Figuren detailliert beschrieben. Es zeigt:
- Fig. 1: eine Axialansicht einer Anpressplatte einer erfindungsgemäß aufgebauten Druckplattenbaugruppe mit daran vorgesehenen, der Verschleißnachstellung dienenden Komponenten;
- Fig. 2: eine perspektivische Teildarstellung zweier Nachstellringe;
- Fig. 3: eine perspektivische Darstellung eines keilartig ausgebildeten Arretierelements;
- Fig. 4: eine Teil-Schnittdarstellung, betrachtet von radial außen, welche die Zusammenwirkung des Arretierelements mit einem Erfassungselement zeigt;
- Fig. 6: eine Axialansicht eines vergrößert dargestellten Bereichs der in Fig. 1 gezeigten Anpressplatte;
- Fig. 7: eine der Fig. 1 entsprechende Darstellung einer alternativen Ausgestaltungsform.

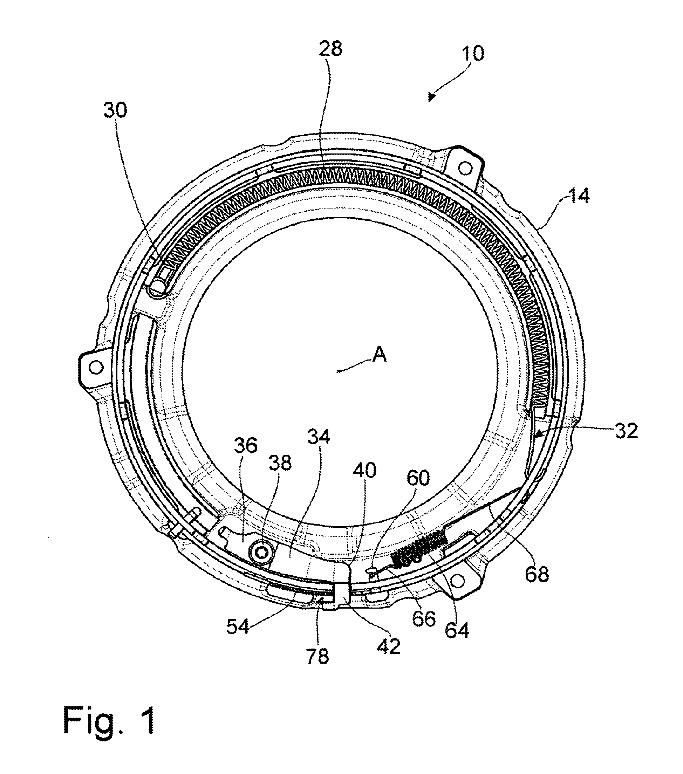

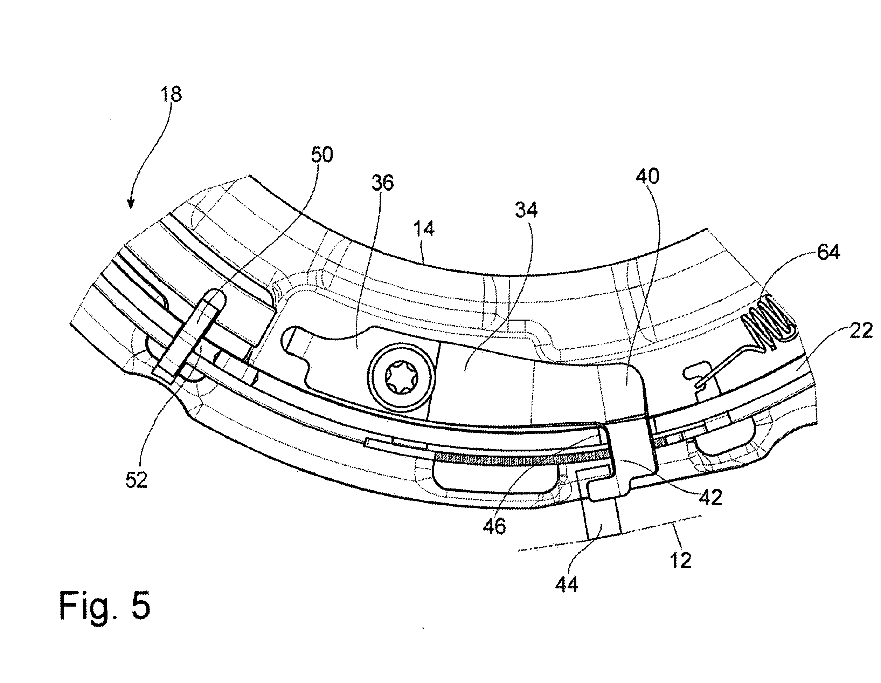

Die Fig. 1 bis 5 zeigen eine Ausgestaltungsart einer allgemein mit 10 bezeichneten erfindungsgemäß aufgebauten Druckplattenbaugruppe mit ihren wesentlichen Komponenten. Diese Druckplattenbaugruppe, die mit einem in der Fig. 5 nur anhand einer Strichlinie symbolisch angedeuteten Gehäuse 12 an einer Widerlageranordnung, also beispielsweise einem Schwungrad, einem Zweimassenschwungrad oder dergleichen festgelegt werden kann, umfasst weiterhin eine ringscheibenartig ausgebildete Anpressplatte 14. Diese kann über eine Mehrzahl von nicht dargestellten Tangentialblattfedern oder dergleichen an dem Gehäuse 12 derart festgelegt sein, dass die Anpressplatte 14 grundsätzlich in Richtung einer zur Zeichenebene der Fig. 1 orthogonal stehenden Drehachse A bewegbar ist, bezüglich des Gehäuses jedoch im Wesentlichen nicht drehbar ist. Die Tangentialblattfedern können gleichzeitig auch eine die Anpressplatte 14 bei Durchführung von Ausrückvorgängen in Richtung von einer Kupplungsscheibe oder dergleichen weg bewegende Lüftkraft erzeugen.

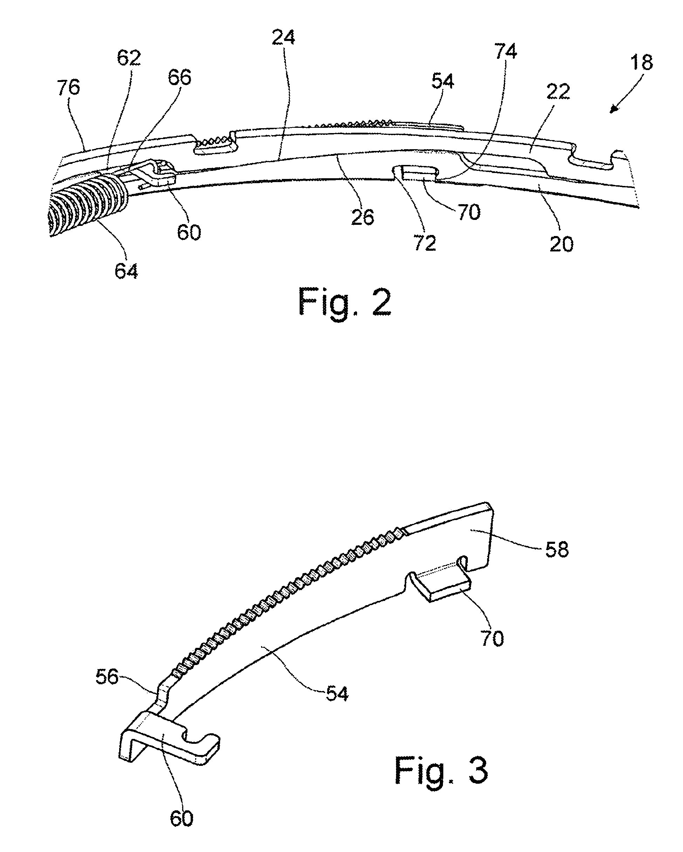

Um die Anpressplatte 14 in Richtung Einrücken zu beaufschlagen, ist als Kraftbeaufschlagungsanordnung beispielsweise im Falle einer Reibungskupplung des Normal-Geschlossen-Typs eine als Kraftspeicher wirksame Membranfeder 16 vorgesehen, die beispielsweise radial innen durch einen Ausrückmechanismus betätigbar ist, in einem radial mittleren Bereich bezüglich des Gehäuses 12 abgestützt ist und in einem radial äußeren Bereich bezüglich der Anpressplatte 14 abgestützt ist. Diese Abstützung bezüglich der Anpressplatte 14 erfolgt über eine allgemein mit 18 bezeichnete Verschleiß-Nachstellvorrichtung. Diese umfasst im dargestellten Beispiel zwei als Nachstellelemente wirksame Nachstellringe 20, 22. Der Nachstellring 22 wird vom Kraftspeicher bzw. der Membranfeder 16 belastet und stützt sich über den Nachstellring 20 an der Anpressplatte ab. In ihren einander zugewandten Oberflächenbereichen weisen der Nachstellring 20 und der Nachstellring 22 zueinander komplementäre Rampenflächenbereiche 24, 26 auf, die bezüglich einer zur Drehachse A im Wesentlichen orthogonalen Ebene unter einem vorbestimmten Winkel geneigt sind. Im Bereich dieser Rampenflächenbereiche 24, 26 sind also die Nachstellringe 20, 22 im Wesentlichen keilartig ausgebildet. Eine Relativ-Umfangsbewegung derart, dass beispielsweise in der Fig. 2 bei drehfest gehaltenem Nachstellring 22 der an der Anpressplatte 14 anliegende Nachstellring 20 sich nach links weg bewegt, führt zu einer Vergrößerung der axialen Baugröße dieser Anordnung. Um diese Bewegung des Nachstellrings 20 in Umfangsrichtung, welche hier also einer Verschleiß-Nachstellbewegungsrichtung entspricht, zu erzwingen, ist eine in Fig. 1 erkennbare Vorspannfeder 28 vorgesehen. Diese ist als Schraubenzugfeder ausgebildet und ist in einem Endbereich 30 an der Anpressplatte 14 festgelegt. Im anderen Endbereich 32 ist sie hakenartig ausgebildet und ist am Nachstellring 20 eingehängt. Die Schraubenzugfeder 28 erstreckt sich bei der in Fig. 1 dargestellten Ausgestaltungsform über einen Winkelbereich von etwa 180° und ist so ausgelegt, dass sie über den gesamten Relativbewegungsbereich, in welchen die Rampenflächenbereiche 24, 26 sich auch in Umfangsrichtung bezüglich einander bewegen können, eine ausreichende Vorspannkraft zur Bewegung des Nachstellrings 20 liefern kann.

Um den im Kupplungsbetrieb aufgetretenen Verschleiß beispielsweise der Reibbeläge einer Kupplungsscheibe zu erfassen, ist ein blattfederartig ausgebildetes Erfassungselement 34 vorgesehen. Dieses ist in einem ersten Umfangsendbereich 36 durch einen Schraubbolzen 38 oder dergleichen radial innerhalb der Nachstellringe 20, 22 an der Anpressplatte 14 festgelegt und erstreckt sich in Umfangsrichtung entlang der Nachstellringe 20, 22. In seinem zweiten Umfangsendbereich 40 greift das Erfassungselement 34 mit einem Erfassungsabschnitt 42 nach radial außen über die Nachstellringe 20, 22 hinaus, so dass es, wie die Fig. 5 dies in prinzipartiger Darstellung zeigt, sich mit einem am Gehäuse 12 festgelegten Anschlag 44 überlappt. Bewegt sich also die Anpressplatte 14 in axialer Richtung bezüglich des Gehäuses 12, bewegt sich auch das Erfassungselement 34 mit seinem Erfassungsabschnitt 42 in Achsrichtung bezüglich des Anschlags 44. Mit seinem nach radial außen greifenden Erfassungsabschnitt 42 durchsetzt das Erfassungselement 34 eine zugeordnete Aussparung 46 im Nachstellring 22. Da das Erfassungselement 34 grundsätzlich an der Anpressplatte 14 festgelegt ist und mithin sich in Umfangsrichtung nicht bewegen kann, kann auf diese Art und Weise durch einen die Aussparung 46 begrenzenden Anschlag 48 der Nachstellring 22 sich gegen den Erfassungsabschnitt 42 des Erfassungselements 34 anlegen, so dass der Nachstellring 22 sich grundsätzlich nicht in Umfangsrichtung bewegen kann. Alternativ oder zusätzlich zu dieser Möglichkeit, den Nachstellring 22 an einer Umfangsbewegung zu hindern, kann, wie in Fig. 5 dargestellt, ein zusätzliches Blockierelement 50 an der Anpressplatte 14 festgelegt sein, welches in eine zugeordnete Aussparung 52 am Nachstellring 22 eingreift und diesen somit gegen Umfangsbewegung blockiert. In diesem Falle kann die von dem Erfassungsabschnitt 42 durchsetzte Aussparung 46 in Umfangsrichtung etwas größer bemessen werden, so dass dort eine gegenseitige Wechselwirkung zwischen dem Erfassungselement 34 und dem Nachstellring 22 nicht auftreten kann.

Ein als keilartiger Schieber ausgebildetes Arretierelement 54 erstreckt sich an der radialen Außenseite der Nachstellringe 20, 22 in Umfangsrichtung. Dieses Arretierelement 54 weist von einem ersten Umfangsendbereich 56 zu einem zweiten Umfangsendbereich 58 hin eine zunehmende axiale Erstreckung auf. Im ersten Umfangsendbereich 56 ist ein nach radial innen greifender hakenartiger Vorsprung 60 vorgesehen, welcher durch eine zwischen den Nachstellringen 20, 22 gebildete Aussparung 62 nach radial innen hindurch greift. Eine als Schraubendruckfeder ausgebildete Vorspannfeder 64 ist mit einem ersten Endbereich 66 an diesem Vorsprung 60 eingehängt. Mit einem zweiten Endbereich 68 ist die Vorspannfeder 64 am in Umfangsrichtung grundsätzlich bewegbaren Nachstellring 20 eingehängt.

In seinem zweiten Umfangsendbereich 58 weist das Arretierelement 54 einen ebenfalls nach radial innen greifenden und als Blockierorgan wirksamen Blockieranschlag 70 auf. Dieser greift in eine zugeordnete Blockieraussparung 72 am Nachstellring 20 ein, und zwar derart, dass, wie dies in der Fig. 2 deutlich sichtbar ist, grundsätzlich ein Umfangsbewegungsspiel zwischen diesem Blockieranschlag 70 und dem Nachstellring 20 besteht. In dem in Fig. 2 dargestellten Zustand liegt der Nachstellring 20 mit einem die Blockieraussparung 72 begrenzenden Anschlag 74 am Blockieranschlag 70 des Arretierelements 54 an.

Die grundsätzliche Funktionalität bei der erfindungsgemäßen Druckplattenbaugruppe 10 zur Verschleißkompensation ist derart, dass bei eingerückter Kupplung die Membranfeder 16 die Nachstellringe 20, 22 derart gegen die Anpressplatte 14 presst, dass durch die auftretenden Reibkräfte eine Relativdrehbewegung der Nachstellringe 20, 22 bezüglich einander nicht auftreten kann, und zwar unabhängig von der Positionierung des Erfassungselements 34 und auch unabhängig von der Positionierung des Arretierelements 54. Tritt bei wiederholt durchgeführten Ein- und Auskuppelvorgängen ein Verschleiß beispielsweise von Reibbelägen einer Kupplungsscheibe auf, bedeutet dies, dass die Anpressplatte näher in Richtung der nicht dargestellten Widerlageranordnung rückt und sich beim Einkuppeln auch weiter bezüglich des Gehäuses 12 und dem daran vorgesehenen Anschlag 44 bewegt. Ist ein bestimmtes Grenzausmaß an Verschleiß erreicht, kommt der Erfassungsabschnitt 42 des Erfassungselements 34 in Anlage an den Anschlag 44 und kann einer noch weiter andauernden Axialbewegung der Anpressplatte 14 nicht mehr folgen. Dies bedeutet, dass der Umfangsendbereich 40 des Erfassungselements 34 im Verlaufe der noch weiter fortgesetzten Axialbewegung der Anpressplatte 14 im Wesentlichen bezüglich des Gehäuses 12 stehen bleibt und somit der zwischen der Anpressplatte 14 und dem Erfassungsabschnitt 42 gebildete axiale Zwischenraum zunimmt. In diesen axialen Zwischenraum erstreckt sich das in Umfangsrichtung langgestreckte Arretierelement 54, das durch die Wirkung der Vorspannfeder 64 grundsätzlich in Umfangsrichtung so vorgespannt ist, dass es in den zwischen dem Erfassungsabschnitt 42 und der Anpressplatte 14 gebildeten Zwischenraum drängt. Nimmt dieser Zwischenraum verschleißbedingt zu, so zieht die Vorspannfeder 64 das Arretierelement in Umfangsrichtung so weit, bis es bedingt durch seine keilartige Ausgestaltung durch den Erfassungsabschnitt 42 grundsätzlich an einer weiteren Bewegung gehindert ist. Die Folge davon ist, dass bei einem nachfolgenden Ausrückvorgang das Erfassungselement 34 mit seinem Erfassungsabschnitt 42 sich nicht wieder bezüglich der Anpressplatte zurück bewegen kann. Über die Betriebslebensdauer hinweg wird also der Erfassungsabschnitt 42 sich zunehmend in Richtung von der Anpressplatte 14 weg bewegen.

Durch die vorangehend beschriebene und bei Auftreten und Sensieren von Verschleiß ermöglichte Umfangsbewegung des Arretierelements 54 wird sich auch der Blockieranschlag 70 in der ihn aufnehmenden Blockieraussparung 72 in Umfangsrichtung verlagern. In der Darstellung der Fig. 2 hat dies zur Folge, dass ausgehend von einer Situation, in welcher grundsätzlich der Nachstellring 20 mit seinem Anschlagabschnitt 74 am Blockieranschlag 70 anliegt, ein Zwischenraum zwischen diesem Anschlagabschnitt 74 und dem Blockierabschnitt 70 entstehen wird, welcher im Ausmaß der Bewegung des Arretierelements 54 in Umfangsrichtung entspricht. Bei einem nachfolgend dann durchgeführten Auskuppelvorgang, in dessen Verlauf die Membranfeder 12 bzw. eine andersartig ausgebildete Kraftbeaufschlagungsanordnung die Belastung der Nachstellringe 20, 22 mindert bzw. aufhebt und somit beispielsweise nur die durch die nicht dargestellten Tangentialblattfedern wirkende Lüftkraft noch eine weitere Einspannung der Nachstellringe 20, 22 zwischen der Membranfeder 16 und der Anpressplatte 14 bewirkt, reicht die Vorspannwirkung der Vorspannfeder 28 aus, um den Nachstellring 20 in Umfangsrichtung zu bewegen. Die Umfangsbewegung kann so lange anhalten, bis der Anschlag 74 wieder an den Blockieranschlag 70 anstößt. Das heißt, der Nachstellring 20 folgt in Umfangsrichtung dem Arretierelement 54, so dass grundsätzlich auch die Vorspannung der Vorspannfeder 64 unabhängig von dem über die Betriebslebensdauer hinweg aufgetretenen Verschleiß näherungsweise konstant gehalten werden kann. Durch die Umfangsbewegung des Nachstellrings 20 wird jedoch aufgrund der aneinander anliegenden Rampenflächenbereiche 24, 26 und aufgrund der Tatsache, dass der Nachstellring 22 sich nicht in Umfangsrichtung bewegen kann, dieser Nachstellring 22 axial verlagert, so dass der an diesem vorgesehene Auflagebereich 76 für die Membranfeder 16 in einem im Zusammenhang mit dem sensierten Verschleiß stehenden Ausmaß in Richtung von der Anpressplatte weg bewegt wird und mithin dieser Verschleiß kompensiert wird.

Aus der vorangehenden Beschreibung erkennt man, dass die Erfassung des Verschleißes dann auftritt, wenn beispielsweise bei Durchführung von Einkuppelvorgängen die Anpressplatte sich in Richtung auf eine Kupplungsscheibe zu bewegt, während die Kompensation des Verschleißes dann auftritt, wenn die Belastung durch einen Kraftspeicher aufgehoben wird und mithin die Anpressplatte sich auch in Richtung von einer Kupplungsscheibe weg bewegt. Grundsätzlich ist die Folge dieses Kompensationsvorgangs, dass der Kraftspeicher bzw. die Membranfeder 16 über die Betriebslebensdauer hinweg in einer näherungsweise konstanten Einbaulage gehalten werden kann.

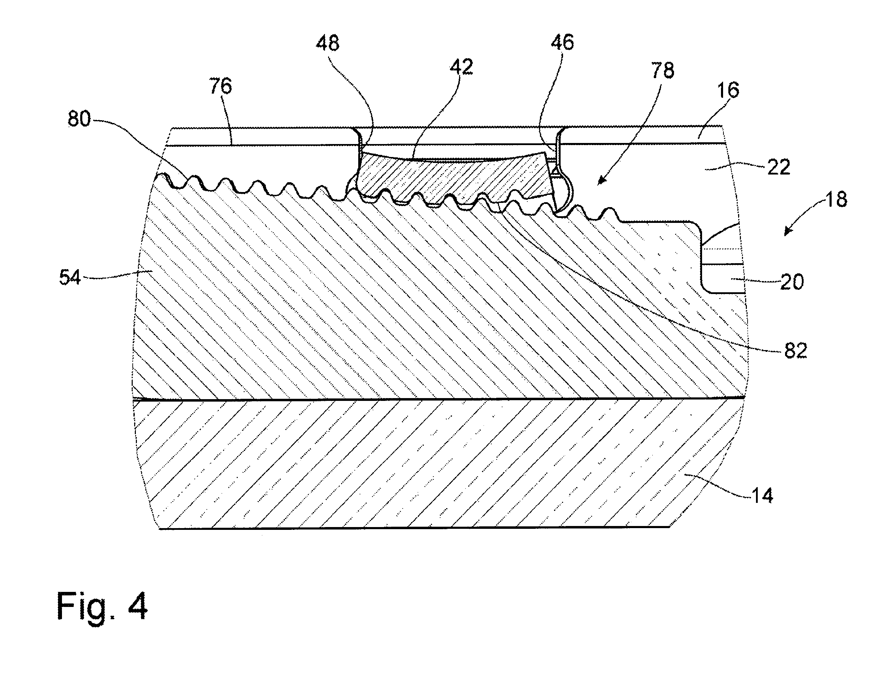

Vor allem in der Fig. 4 erkennt man deutlich, dass das Erfassungselement 34 mit seinem Erfassungsabschnitt 42 und das Arretierelement 54 über eine Formschlusseingriffsanordnung 78 miteinander in Wechselwirkung stehen. Diese Formschlusseingriffsanordnung 78 umfasst eine erste Verzahnung 80 an der von der Anpressplatte 14 abgewandten Seite des keilartig ausgebildeten Arretierelements 54 sowie eine dazu komplementäre zweite Verzahnung 82 an der dem Arretierelement 54 zugewandten Seite des Erfassungsabschnitts 42. Wie die Fig. 4 dies zeigt, stehen grundsätzlich diese beiden Verzahnungen 80, 82 in Kämmeingriff, so dass im Wesentlichen unabhängig von der durch die blattfederartige Ausgestaltung des Erfassungselements 34 generierten axialen Vorspannlast auf das Arretierelement 54 dieses nicht in Umfangsrichtung bewegt werden kann. Somit kann vermieden werden, dass auch stärkere Vibrationen oder Rüttelbewegungen oder bei Durchführung von Impulsstarts Kräfte auftreten, die die zwischen dem Arretierelement 54 und dem Erfassungselement 34 einerseits und der Anpressplatte 14 andererseits bestehenden Reibkräfte in Umfangsrichtung überwinden und somit durch eine auch unter zusätzlicher Vorspannung der Feder 64 erzwungene ungewünschte Verlagerung des Arretierelements 54 nachfolgend dann auch eine entsprechende Nachstellbewegung des Nachstellrings 20 entstehen könnte. Eine Umfangsbewegung des Arretierelements 54 ist erstens nur dann möglich, wenn bedingt durch den aufgetretenen Verschleiß der Erfassungsabschnitt 42 sich derart weit von der Anpressplatte 14 weg bewegt hat, in der Darstellung der Fig. 4 also nach oben bewegt hat, dass die beiden Verzahnungen 80, 82 außer Eingriff bzw. so weit außer Eingriff sind, dass das Arretierelement 54 sich in Umfangsrichtung bewegen kann. Da dieses keilartig ausgebildet ist, die Verzahnung 80 also bezüglich einer zur Drehachse orthogonalen Ebene schräg gestellt verläuft, wird im Allgemeinen das Arretierelement 54 sich um die Teilung der Verzahnungen 80, 82, also den einfachen Abstand zwischen zwei Zähnen, weiter bewegen können, bevor wieder ein Formschlusseingriff zwischen den beiden Verzahnungen 80, 82 hergestellt ist. Dies bedeutet grundsätzlich, dass unabhängig davon, dass der Erfassungsabschnitt 42 sich dem auftretenden Verschleiß entsprechend kontinuierlich bezüglich der Anpressplatte verlagern kann, das Arretierelement 54 sich in der Teilung der Verzahnungen 80, 82 entsprechendem Ausmaß schrittartig in Umfangsrichtung bewegen wird.

Da das Erfassungselement 34 in Umfangsrichtung langgestreckt ist, wird bei zunehmender Auslenkung des zweiten Umfangsendbereichs 40 desselben der Erfassungsabschnitt 42 keine Linearverschiebung bezüglich der Anpressplatte 14 und auch bezüglich des Arretierelements 54 in axialer Richtung durchführen, sondern eine Schwenk- bzw. Drebewegung. Um sicherzustellen, dass über die Betriebslebensdauer hinweg die beiden Verzahnungen 80, 82 in einer durch diese Verschwenkung unbeeinträchtigten Art und Weise zusammenwirken können, ist, wie dies die Fig. 4 deutlich zeigt, der Erfassungsabschnitt 42 bezüglich des Arretierelements 54 konvex, also bauchig gewölbt. Diese Wölbung kann beispielsweise gemäß einer Kreislinie oder einer Ellipse bzw. oval ausgebildet sein und hängt primär auch von der geometrischen Gestaltung des Erfassungselements 34 ab. Unabhängig davon, wie stark also das Erfassungselement 34 in seinem zweiten Umfangsendbereich 40 bezüglich der Anpressplatte 14 axial verlagert worden ist und dabei der Erfassungsabschnitt 42 um eine im Wesentlichen radial stehende imaginäre Achse gedreht worden ist, greifen somit die beiden Verzahnungen 80, 82 immer in gleicher Art und Weise ineinander ein. Diese gleichmäßige Zusammenwirkung der beiden Verzahnungen 80, 82 kann auch durch die Ausgestaltung der Zahngeometrie noch unterstützt werden. So können diese vorzugsweise mit sinusförmiger bzw. trapezförmiger Geometrie ausgebildet sein.

Mit der vorangehend beschriebenen Ausgestaltung einer Druckplattenbaugruppe werden neben dem vorangehend beschriebenen wesentlichen Aspekt, dass das Arretierelement 54 und mit diesem auch der Nachstellring 20 durch Formschlusseingriff mit dem Erfassungselement an einer ungewünschten und undefinierten Bewegung gehindert sind, weitere Vorteile erreicht. Beispielsweise verhindert die Positionierung des Arretierelements 54 radial außerhalb der Nachstellringe 20, 22 ein fliehkraftbedingtes Anlegen des Arretierelements gegen die Nachstellringe, die grundsätzlich durch entsprechende Ausgestaltung der Anpressplatte radial bezüglich dieser in definierter Positionierung gehalten sind. Die Führung für das Arretierelement 54 kann durch die entsprechende Ausgestaltung der Anpressplatte mit Führungsabschnitten bzw. einer Führungsnut für das Arretierelement 54 realisiert sein kann.

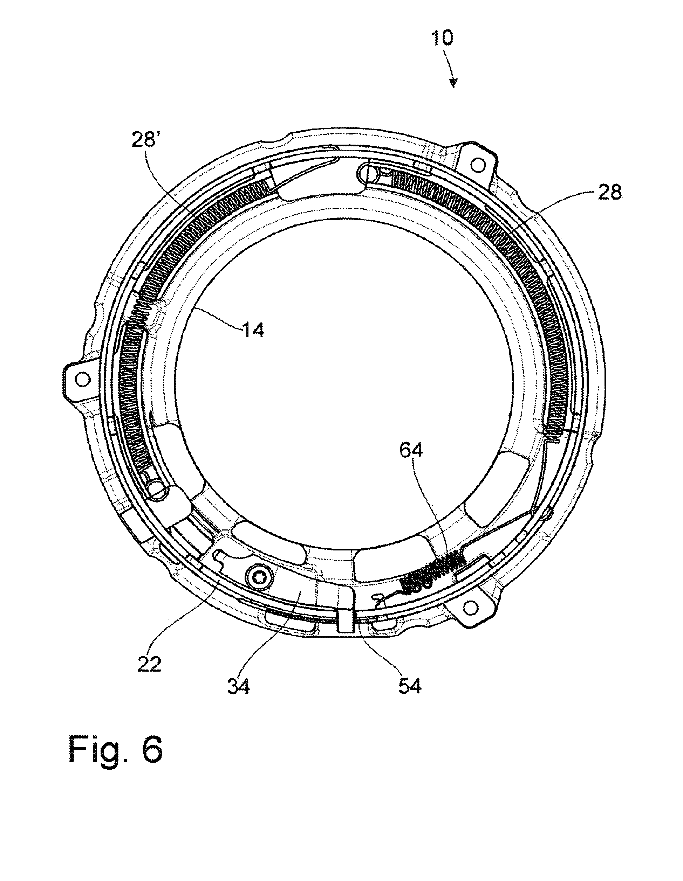

Bei dem vorangehend beschriebenen Aufbau einer Druckplattenbaugruppe können selbstverständlich verschiedenste Variationen vorgenommen werden, ohne von den Prinzipien der vorliegenden Erfindung abzuweichen. So kann beispielsweise, wie in Fig. 6 gezeigt, die Anzahl der den Nachstellring 20 beaufschlagenden Vorspannfedern variiert werden. Anstelle einer einzigen Vorspannfeder 28 können zwei derartige Vorspannfedern 28, 28' mit jeweils etwas kürzerer Umfangserstreckung vorgesehen sein. Auf diese Art und Weise wird es möglich, die auf den Nachstellring 20 einwirkende Vorspannkraft zu variieren. Eine größere Vorspannkraft kann durch eine größere Anzahl an Federn aufgebracht werden.

Die Formschlusseingriffsanordnung kann alternativ oder zusätzlich zu den beiden vorangehend beschriebenen Verzahnungen auch eine Verzahnung an der Anpressplatte und der an der Anpressplatte anliegenden Seite des Arretierelements 54 umfassen. Die an der Anpressplatte 14 vorgesehene Verzahnung kann unmittelbar an dieser oder an einem in eine entsprechende Aussparung eingesetzten Bauteil vorgesehen sein. Auch damit wird es möglich, bei fehlender Belastung des Arretierelements durch das Erfassungselement den Formschlusseingriff dieser beiden Verzahnungen aufzuheben, wozu beispielsweise die Vorspannfeder 64 so gestaltet sein kann, dass sie auf das Arretierelement zusätzlich eine dieses axial in Richtung von der Anpressplatte abhebende Kraftkomponente ausübt.

Weiter ist es möglich, den Keilwinkel des Arretierelements und die Rampenflächenbereiche 24, 26 der Nachstellringe 20, 22 so auszugestalten, dass ein definiertes Kompensationsverhältnis entsteht. Dieses Kompensationsverhältnis kann so ausgewählt werden, dass eine dem Keilwinkel des Arretierelements induzierten Verschiebung desselben entsprechende Verdrehung des Nachstellrings 20 und mithin Axialverschiebung des Nachstellrings 22 erzeugt wird, welche im Wesentlichen exakt der durch aufgetretenen Verschleiß induzierten zusätzlichen Verschiebung der Anpressplatte entspricht. Hierzu kann beispielsweise der Keilwinkel des Arretierelements im Wesentlichen dem Keilwinkel beispielsweise des Nachstellrings 20 entsprechen. Sind die Rampenflächenbereiche 24, 26 mit geringerer Steigung ausgebildet, so hat eine definierte Drehbewegung eine geringere Axialverlagerung des Nachstellrings 22 zur Folge, so dass eine Unterkompensation stattfindet.

Sind die Rampenflächenbereiche 24, 26 mit größerem Steigungs- bzw. Keilwinkel ausgebildet, so findet eine Überkompensation statt. Je nachdem, wie in einer derartigen Druckplattenbaugruppe sich über die Betriebslebensdauer hinweg die Verhältnisse der Zusammenwirkung der verschiedenen Baugruppen entwickeln, kann somit dafür gesorgt werden, dass nicht nur der Dickenabnahme der Reibbeläge einer Kupplungsscheibe Rechnung getragen wird, sondern beispielsweise auch einer durch Alterung bedingten Abnahme der Vorspannung der Membranfeder oder einem Einarbeiten des Auflagebereich des Nachstellrings 22 in die Membranfeder.

Auch sei darauf hingewiesen, dass die Verschleiß-Nachstellvorrichtung auch so aufgebaut sein kann, dass sie lediglich einen einzigen Nachstellring umfasst. Dieser kann mit seinen Rampenflächenbereichen dann an entsprechenden Rampenflächenbereichen abgleiten, die unmittelbar an der Anpressplatte vorgesehen sind. Anstelle eines oder mehrerer Nachstellringe könnten selbstverständlich auch andere Baugruppen, wie z. B. keilartige Schieber, eingesetzt werden.

## Patentansprüche

1. Druckplattenbaugruppe, insbesondere für eine Kraftfahrzeug-Reibungskupplung mit automatischem Verschleißausgleich, umfassend:
- ein Gehäuse (12), welches an einer Widerlageranordnung zur gemeinsamen Drehung mit dieser um eine Drehachse (A) festlegbar oder festgelegt ist,
- eine im Gehäuse (12) im Wesentlichen drehfest angeordnete und bezüglich diesem axial verlagerbare Anpressplatte (14),
- eine Kraftbeaufschlagungsanordnung (16), vorzugsweise Membranfeder, welche bezüglich des Gehäuses (12) einerseits und der Anpressplatte (14) andererseits abgestützt ist,
- eine im Abstützweg der Kraftbeaufschlagungsanordnung (16) bezüglich der Anpressplatte (14) angeordnete Verschleiß-Nachstellvorrichtung (18) mit wenigstens einem zur Verschleißkompensation verlagerbaren Nachstellelement (20, 22), wobei wenigstens ein Nachstellelement (20) zur Bewegung in einer Verschleiß-Nachstellbewegungsrichtung vorgespannt ist und sich bei Bewegung in der Verschleiß-Nachstellbewegungsrichtung mit einer in der Verschleiß-Nachstellbewegungsrichtung geneigten Fläche (24) entlang einer Gegenfläche (26) bewegt oder/und sich bei Bewegung in der Verschleiß-Nachstellbewegungsrichtung entlang einer in der Verschleiß-Nachstellbewegungsrichtung geneigten Gegenfläche (26) bewegt, wobei das zur Bewegung in der Verschleiß-Nachstellbewegungsrichtung vorgespannte Nachstellelement (20) durch wenigstens ein Blockierorgan (70) gegen Bewegung in der Verschleiß-Nachstellbewegungsrichtung blockierbar ist,
- wenigstens eine Spielgeberanordnung (34, 44) zur Erfassung des Verschleißes, wobei die wenigstens eine Spielgeberanordnung (34, 44) ein Erfassungselement (34) an der Anpressplatte (14) umfasst, das mit einer bei Auftreten von Verschleiß bezüglich der Anpressplatte (14) verlagerbaren Komponente (44) zur Erfassung des Verschleißes in Wechselwirkung steht oder bringbar ist und durch diese Wechselwirkung in eine dem Verschleiß entsprechende Stellung bezüglich der Anpressplatte (14) bringbar ist,
- ein Arretierelement (54), durch welches das Erfassungselement (34) der wenigstens einen Spielgeberanordnung (34, 44) in seiner dem Verschleiß entsprechenden Stellung bezüglich der Anpressplatte (14) arretierbar ist, wobei das wenigstens eine Blockierorgan (70) an dem Arretierelement (54) vorgesehen ist,
eine zwischen dem Arretierelement (54) und dem Erfassungselement (34) der wenigstens einen Spielgeberanordnung (34, 44) oder/und der Anpressplatte (14) wirkende und eine Bewegung des Arretierelements (54) bezüglich des Erfassungselements (34) und der Anpressplatte (14) nur dann, wenn das Erfassungselement (34) bezüglich der Anpressplatte (14) in einem eine Verschleißnachstellung zulassenden Ausmaß bewegt worden ist, zulassende Formschlusseingriffsanordnung, **dadurch gekennzeichnet, dass** die Formschlusseingriffsanordnung (78) eine erste Verzahnung (80) an dem Arretierelement (54) und eine zweite Verzahnung (82) an einem mit dem Arretierelement (54) zusammenwirkenden Bereich (42) des Erfassungselements (34) der wenigstens einen Spielgeberanordnung (34, 44) umfasst.

2. Druckplattenbaugruppe nach Anspruch 1,
**dadurch gekennzeichnet, dass** das Arretierelement (54) keilartig ausgebildet ist und mit einem als Blockierorgan wirksamen Blockieranschlag (70) in eine Blockieraussparung (72) des zur Bewegung in Umfangsrichtung vorgespannten Nachstellelements (20) mit Bewegungsspiel in der Verschleiß-Nachstellbewegungsrichtung eingreift.

3. Druckplattenbaugruppe nach Anspruch 1 oder 2,
**dadurch gekennzeichnet, dass** das Arretierelement (54) zur Bewegung in der Verschleiß-Nachstellbewegungsrichtung vorgespannt ist.

4. Druckplattenbaugruppe nach einem der Ansprüche 1 bis 3,
**dadurch gekennzeichnet, dass** das Erfassungselement (34) der wenigstens einen Spielgeberanordnung (34, 44) langgestreckt ist und in einem ersten Endbereich (36) an der Anpressplatte (14) festgelegt ist und in einem zweiten Endbereich (40) den mit dem Arretierelement (54) zusammenwirkenden Bereich (42) mit der zweiten Verzahnung (82) aufweist.

5. Druckplattenbaugruppe nach Anspruch 1,
**dadurch gekennzeichnet, dass** das Erfassungselement (34) der wenigstens einen Spielgeberanordnung (34, 44) in seinem mit dem Arretierelement (54) zusammenwirkenden Bereich (42) bezüglich des Arretierelements (54) konvex gewölbt ausgebildet ist und in diesem Bereich (42) die zweite Verzahnung (82) aufweist.

6. Druckplattenbaugruppe nach einem der Ansprüche 1 bis 5,
**dadurch gekennzeichnet, dass** an der Anpressplatte (14) oder einer an dieser vorgesehenen Komponente eine Verzahnung der Formschlusseingriffsformation vorgesehen ist, welche mit einer an dem Arretierelement vorgesehenen Verzahnung in Eingriff steht oder bringbar ist.

7. Druckplattenbaugruppe nach einem der Ansprüche 1 bis 5,
**dadurch gekennzeichnet, dass** die Verschleiß-Nachstellvorrichtung (18) zwei als Nachstellringe (20, 22) ausgebildete Nachstellelemente umfasst, wobei einer (20) der Nachstellringe (20, 22) zur Bewegung in der Verschleiß-Nachstellbewegungsrichtung vorgespannt ist und der andere Nachstellring (22) gegen Bewegung in der Verschleiß-Nachstellrichtung blockiert ist.

8. Druckplattenbaugruppe nach Anspruch 7,
**dadurch gekennzeichnet, dass** der andere Nachstellring (22) durch ein an der Anpressplatte (14) festgelegtes Blockierelement (34; 50) gegen Bewegung in der Verschleißnachstellrichtung blockiert ist.

9. Druckplattenbaugruppe nach Anspruch 8,
**dadurch gekennzeichnet, dass** das Erfassungselement (34) der wenigstens einen Spielgeberanordnung (34, 44) das Blockierelement bildet.

10. Druckplattenbaugruppe nach einem der Ansprüche 1 bis 9,
**dadurch gekennzeichnet, dass** die Verschleiß-Nachstellvorrichtung (18) zur Kompensation eines durch das Erfassungselement (34) der wenigstens einen Spielgeberanordnung (34, 44) erfassten Verschleißes in einem von eins verschiedenen Kompensationsverhältnis ausgebildet ist.

11. Druckplattenbaugruppe nach Anspruch 2 und Anspruch 10,
**dadurch gekennzeichnet, dass** ein Keilwinkel des Arretierelements (54) sich von einem Neigungswinkel der geneigten Fläche (24, 26) des wenigstens einen Nachstellelements (20, 22) oder/und einem Neigungswinkel der Gegenfläche unterscheidet.

12. Druckplattenbaugruppe nach einem der Ansprüche 1 bis 11,
**dadurch gekennzeichnet, dass** das Arretierelement (54) radial außerhalb des wenigstens einen Nachstellelements (20, 22) angeordnet ist.

13. Druckplattenbaugruppe nach einem der Ansprüche 1 bis 12,
**dadurch gekennzeichnet, dass** das zur Bewegung in der Verschleiß-Nachstellbewegungsrichtung vorgespannte Nachstellelement (20) durch wenigstens eine vorzugsweise in der Verschleiß-Nachstellbewegungsrichtung langgestreckte Feder (28, 28') vorgespannt ist.

## Claims

1. Pressure plate assembly, in particular for a motor vehicle friction clutch with automatic wear compensation, comprising:
- a housing (12) which can be fixed or is fixed on an abutment arrangement for common rotation with the latter about a rotational axis (A),
- a pressing plate (14) which is arranged substantially fixedly in the housing (12) so as to rotate with it and can be displaced axially with regard to it,
- a force loading arrangement (16), preferably a diaphragm spring, which is supported on one side with regard to the housing (12) and on the other side with regard to the pressing plate (14),
- a wear adjusting apparatus (18) which is arranged in the supporting path of the force loading arrangement (16) with regard to the pressing plate (14), with at least one adjusting element (20, 22) which can be displaced for wear compensation, at least one adjusting element (20) being prestressed for movement in a wear adjusting movement direction and moving with a face (24) which is inclined in the wear adjusting movement direction along a mating face (26) during movement in the wear adjusting movement direction and/or moving along a mating face (26) which is inclined in the wear adjusting movement direction during movement in the wear adjusting movement direction, it being possible for the adjusting element (20) which is prestressed for movement in the wear adjusting movement direction to be blocked by at least one blocking member (70) against movement in the wear adjusting movement direction,
- at least one play indicator arrangement (34, 44) for detecting the wear, the at least one play indicator arrangement (34, 44) comprising a detection element (34) on the pressing plate (14), which detection element (34) is in interaction or can be brought into interaction with a component (44) for detecting the wear, which component (44) can be displaced with regard to the pressing plate (14) if wear occurs, and, as a result of this interaction, can be brought with regard to the pressing plate (14) into a position which corresponds to the wear,
- a locking element (54), by way of which the detection element (34) of the at least one play indicator arrangement (34, 44) can be locked with regard to the pressing plate (14) in the position of the said detection element (34) which corresponds to the wear, the at least one blocking member (70) being provided on the locking element (54),
- a positively locking engagement arrangement which acts between the locking element (54) and the detection element (34) of the at least one play indicator arrangement (34, 44) and/or the pressing plate (14) and permits a movement of the locking element (54) with regard to the detection element (34) and the pressing plate (14) only when the detection element (34) has been moved with regard to the pressing plate (14) to an extent which permits a wear adjustment, **characterized in that** the positively locking engagement arrangement (78) comprises a first toothing system (80) on the locking element (54) and a second toothing system (82) on a region (42) of the detection element (34) of the at least one play indicator arrangement (34, 44), which region (42) interacts with the locking element (54).

2. Pressure plate assembly according to Claim 1, **characterized in that** the locking element (54) is of wedge-like configuration and engages with a blocking stop (70) which acts as a blocking member into a blocking cut-out (72) of the adjusting element (20) which is prestressed for movement in the circumferential direction, with a movement play in the wear adjusting movement direction.

3. Pressure plate assembly according to Claim 1 or 2, **characterized in that** the locking element (54) is prestressed for movement in the wear adjusting movement direction.

4. Pressure plate assembly according to one of Claims 1 to 3, **characterized in that** the detection element (34) of the at least one play indicator arrangement (34, 44) is elongate and, in a first end region (36), is fixed on the pressing plate (14) and, in a second end region (40), has the region (42) with the second toothing system (82), which region (42) interacts with the locking element (54).

5. Pressure plate assembly according to Claim 1, **characterized in that** the detection element (34) of the at least one play indicator arrangement (34, 44) is of convexly curved configuration with regard to the locking element (54) in the region (42) of the said detection element (34), which region (42) interacts with the locking element (54), and the said detection element (34) has the second toothing system (82) in this region (42).

6. Pressure plate assembly according to one of Claims 1 to 5, **characterized in that** a toothing system of the positively locking engagement formation is provided on the pressing plate (14) or a component which is provided thereon, which toothing system is in engagement or can be brought into engagement with a toothing system which is provided on the locking element.

7. Pressure plate assembly according to one of Claims 1 to 5, **characterized in that** the wear adjusting apparatus (18) comprises two adjusting elements which are configured as adjusting rings (20, 22), one (20) of the adjusting rings (20, 22) being prestressed for movement in the wear adjusting movement direction and the other adjusting ring (22) being blocked against movement in the wear adjusting direction.

8. Pressure plate assembly according to Claim 7, **characterized in that** the other adjusting ring (22) is blocked against movement in the wear adjusting direction by a blocking element (34; 50) which is fixed on the pressing plate (14).

9. Pressure plate assembly according to Claim 8, **characterized in that** the detection element (34) of the at least one play indicator arrangement (34, 44) forms the blocking element.

10. Pressure plate assembly according to one of Claims 1 to 9, **characterized in that** the wear adjusting apparatus (18) is configured for compensating for a wear which is detected by the detection element (34) of the at least one play indicator arrangement (34, 44) in a compensation ratio which does not equal one.

11. Pressure plate assembly according to Claim 2 and Claim 10, **characterized in that** a wedge angle of the locking element (54) differs from an inclination angle of the inclined face (24, 26) of the at least one adjusting element (20, 22) and/or an inclination angle of the mating face.

12. Pressure plate assembly according to one of Claims 1 to 11, **characterized in that** the locking element (54) is arranged radially outside the at least one adjusting element (20, 22).

13. Pressure plate assembly according to one of Claims 1 to 12, **characterized in that** the adjusting element (20) which is prestressed for movement in the wear adjusting movement direction is prestressed by at least one spring (28, 28') which is preferably elongate in the wear adjusting movement direction.

## Revendications

1. Module de plateau de pression, en particulier pour un embrayage à friction d'un véhicule automobile, comprenant une compensation automatique de l'usure, comprenant :
- un boîtier (12) qui peut être fixé ou qui est fixé à un agencement de butée en vue d'une rotation commune avec celui-ci autour d'un axe de rotation (A),
- un plateau de pressage (14) disposé essentiellement de manière solidaire en rotation dans le boîtier (12) et pouvant être décalé axialement par rapport à celui-ci,
- un agencement de sollicitation de force (16), de préférence un ressort à membrane, qui est supporté d'une part par rapport au boîtier (12) et d'autre part par rapport au plateau de pressage (14),
- un dispositif de rattrapage de l'usure (18) disposé dans la voie de support de l'agencement de sollicitation de force (16) par rapport au plateau de pressage (14) avec au moins un élément de rattrapage (20, 22) pouvant être décalé en vue d'une compensation de l'usure, au moins un élément de rattrapage (20) étant précontraint de manière à se déplacer dans une direction de déplacement de rattrapage de l'usure et se déplaçant au cours du déplacement dans la direction du déplacement de rattrapage de l'usure avec une surface (24) inclinée dans la direction du déplacement de rattrapage de l'usure le long d'une surface conjuguée (26) et/ou se déplaçant lors du déplacement dans la direction du déplacement de rattrapage de l'usure le long d'une surface conjuguée (26) inclinée dans la direction du déplacement de rattrapage de l'usure, l'élément de rattrapage (20) précontraint en vue du déplacement dans la direction du déplacement de rattrapage de l'usure pouvant être bloqué par au moins un organe de blocage (70) contre le déplacement dans la direction du déplacement de rattrapage de l'usure,
- au moins un agencement de détection de jeu (34, 44) pour détecter l'usure, l'au moins un agencement de détection de jeu (34, 44) comprenant un élément de détection (34) au niveau du plateau de pressage (14), lequel est ou peut être amené en interaction avec un composant (44) pouvant être décalé par rapport au plateau de pressage (14) en présence d'usure, en vue de détecter l'usure, et peut être amené grâce à cette interaction dans une position correspondant à l'usure par rapport au plateau de pressage (14),
- un élément d'arrêt (54) par le biais duquel l'élément de détection (34) de l'au moins un agencement de détection de jeu (34, 44) peut être bloqué dans sa position correspondant à l'usure par rapport au plateau de pressage (14), l'au moins un organe de blocage (70) étant prévu au niveau de l'élément d'arrêt (54),
- un agencement d'engagement par correspondance de forme agissant entre l'élément d'arrêt (54) et l'élément de détection (34) de l'au moins un agencement de détection de jeu (34, 44) et/ou du plateau de pressage (14) et permettant un déplacement de l'élément d'arrêt (54) par rapport à l'élément de détection (34) et au plateau de pressage (14) uniquement lorsque l'élément de détection (34) a été déplacé dans une mesure permettant un rattrapage de l'usure par rapport au plateau de pressage (14), **caractérisé en ce que** l'agencement d'engagement par correspondance de forme (78) comprend une première denture (80) au niveau de l'élément d'arrêt (54) et une deuxième denture (82) au niveau d'une région (42) de l'élément de détection (34) de l'au moins un agencement de détection de jeu (34, 44) coopérant avec l'élément d'arrêt (54).

2. Module de plateau de pression selon la revendication 1,
**caractérisé en ce que** l'élément d'arrêt (54) est réalisé en forme de clavette et s'engage avec une butée de blocage (70) servant d'organe de blocage dans un évidement de blocage (72) de l'élément de rattrapage (20) précontraint de manière à se déplacer dans la direction périphérique, avec un jeu de déplacement dans la direction du déplacement de rattrapage de l'usure.

3. Module de plateau de pression selon la revendication 1 ou 2,
**caractérisé en ce que** l'élément d'arrêt (54) est précontraint de manière à se déplacer dans la direction du déplacement de rattrapage de l'usure.

4. Module de plateau de pression selon l'une quelconque des revendications 1 à 3,
**caractérisé en ce que** l'élément de détection (34) de l'au moins un agencement de détection de jeu (34, 44) est longiligne et est fixé dans une première région d'extrémité (36) au plateau de pressage (14) et dans une deuxième région d'extrémité (40) présente la région (42) avec la deuxième denture (82), coopérant avec l'élément d'arrêt (54).

5. Module de plateau de pression selon la revendication 1,
**caractérisé en ce que** l'élément de détection (34) de l'au moins un agencement de détection de jeu (34, 44) est réalisé avec une courbure convexe par rapport à l'élément d'arrêt (54) dans sa région (42) coopérant avec l'élément d'arrêt (54) et présente dans cette région (42) la deuxième denture (82).

6. Module de plateau de pression selon l'une quelconque des revendications 1 à 5,
**caractérisé en ce qu'**une denture de la formation d'engagement par correspondance de forme est prévue au niveau du plateau de pressage (14) ou au niveau d'un composant prévu sur celui-ci, ladite denture étant ou pouvant être amenée en prise avec une denture prévue sur l'élément d'arrêt.

7. Module de plateau de pression selon l'une quelconque des revendications 1 à 5,
**caractérisé en ce que** le dispositif de rattrapage de l'usure (18) comprend deux éléments de rattrapage réalisés sous forme de bagues de rattrapage (20, 22), une (20) des bagues de rattrapage (20, 22) étant précontrainte de manière à se déplacer dans la direction du déplacement de rattrapage de l'usure et l'autre bague de rattrapage (22) étant bloquée contre tout déplacement dans la direction de rattrapage de l'usure.

8. Module de plateau de pression selon la revendication 7,
**caractérisé en ce que** l'autre bague de rattrapage (22) est bloquée contre tout déplacement dans la direction de rattrapage de l'usure par un élément de blocage (34 ; 50) fixé au niveau du plateau de pressage (14).

9. Module de plateau de pression selon la revendication 8,
**caractérisé en ce que** l'élément de détection (34) de l'au moins un agencement de détection de jeu (34, 44) forme l'élément de blocage.

10. Module de plateau de pression selon l'une quelconque des revendications 1 à 9,
**caractérisé en ce que** le dispositif de rattrapage de l'usure (18) est réalisé de manière à compenser une usure détectée par l'élément de détection (34) de l'au moins un agencement de détection de jeu (34, 44) dans un rapport de compensation différent de un.

11. Module de plateau de pression selon la revendication 2 et la revendication 10,
**caractérisé en ce qu'**un angle de clavetage de l'élément d'arrêt (54) se distingue d'un angle d'inclinaison de la surface inclinée (24, 26) de l'au moins un élément de rattrapage (20, 22) et/ou d'un angle d'inclinaison de la surface conjuguée.

12. Module de plaque de pression selon l'une quelconque des revendications 1 à 11,
**caractérisé en ce que** l'élément d'arrêt (54) est disposé radialement à l'extérieur de l'au moins un élément de rattrapage (20, 22).

13. Module de plateau de pression selon l'une quelconque des revendications 1 à 12,
**caractérisé en ce que** l'élément de rattrapage (20) précontraint de manière à se déplacer dans la direction du déplacement de rattrapage de l'usure est précontraint par au moins un ressort (28, 28') longiligne de préférence s'étendant dans la direction du déplacement de rattrapage de l'usure.
